# EUROPEAN PATENT APPLICATION

(11) **EP 2 436 839 A2**
(43) Date of publication of application: **04.04.2012**
(21) Application number: 11183889.2
(22) Date of filing: 04.10.2011
(51) Int. Cl.: E01B 26/00

(54) **Fixation of a cable to a railway rail**

(30) Priority: 04.10.2010 NL 2005452; 03.10.2011 NL 2007528
(71) Applicant: VolkerRail Nederland BV, 4131 NJ Vianen (NL)
(72) Inventor: Schrandt, Leo, 4131 NJ Vianen (NL)
(74) Representative: Assendelft, Jacobus H.W.

(57) **Abstract**

Mounting of a cable to a railway rail, wherein across the cable a separate part, e.g. dice, is located, which part has an across its complete width extending cavity, e.g. edge recess, which in itself or together with the rail provides an along a part of the length of the cable extending, the cable radially around completely surrounding cavity with a shape and dimension substantially equal to the cross section of the cable and preferably located at the location approximately where the foot and web of the rail meet, and which part by a to the rail by snapping hooked resilient finger of e.g. strip like spring steel is anchored to the rail.

## Description

It is known that parallel along the rail of a track an energy of signal conveying cable extends, which spaced along its length is mounted to the rail. Refer to, e.g. CN2421219Y disclosing a strip like clamp of spring steel extending below the rail foot from the one to the opposite side of the rail and is clamped to the rail and with which a cable with isolating sheath is directly clamped between an across the upper side of the rail foot extending finger of the clamp and the upper side of the rail foot.

The object of the invention is versatile and is, e.g. one or more of the following: the cable is guarded against theft in an optimised sense; ease of mounting; durable; cheap; fail safe; applicable to two of more rail types (e.g. UIC60 and UIC 54), applicable to mounting one, two or more cables.

It is thus proposed to Mount the cable such that one or more of the following is applicable: a clamp is applied which indirectly, meaning with the intermediate of a separate part, such as a dice, engages the cable; the clamp has a facility for clamping or snapping or hooking mounting to the rail, such as the rail foot; the clamp hooks to the one side of the rail foot, subsequently extends below the rail foot to its opposite side and also hooks at said opposite side and from there a finger extends across the upper side of the rail foot in the direction of the rail web and/or upward and holds the part or dice in a clamping manner; the cable is arrested between the upper side of the rail foot and/or the rail web and the part or dice and/or the clamp; the part has a from its one to its opposite face extending, preferably along its complete length sideways open recess in which a cable can be housed, preferably by sideways movement can move in and out said recess, which recess preferably with the surface of the rail foot and/or rail web, during operative application of the part, provides a radially around completely closed housing with a shape and dimension substantially equal to that of a single or two or more parallel close to each other extending cables; the part has at a single or two or more sides a recess into which a part of the clamp fits, preferably such that the recess provides an in a single or both opposite directions acting, preferably tightly fitting, edge enclosure for the clamp, preferably active in the direction parallel to the rail length; located in the operative position against the rail, e.g. rail foot, the part provides an upright wall and from a high level of it an angled wall extending to the rail web, to a single or both walls the clamp engages; the part is more shape stable then the cable or part of it, e.g. sheath; of the clamp the with the part engaging parts are strip like in stead of wire like; when in the operative position of the part against the rail both together determine a channel parallel to the rail length and debouching at both ends and into which a cable can be threaded.

The part comprises preferably reinforcement, e.g. of fibres, to make cutting by a knife difficult, e.g. fibres having a length of at least 0.25 of 0.5 and or 3 centimetre at the most, e.g. approximately 1.0 centimetre. The part is preferably substantially made from an elastomere, e.g. natural rubber and/or has one or more of the following properties: hardness Shore A of at least approximately 70 or 85 or 90, such as between approximately 92 and 95; hardness Shore D of at least approximately 20 or 30 or 35, such as between approximately 38 and 42 (hardness Shore A and D measured according to DIN53505); a tension strength of at least approximately 10 or 15 or 20, such as approximately 21 N/mm2, an elongation at break of at least approximately 100 or 200 or 300 or 350 or 400, such as approximately 425% (tension strength and elongation at break measured according to DIN53504); a tear strength of at least approximately 30 or 45 or 50 or 55, such as approximately 58 kN/m (measured according to DIN53515). The part is preferably solid.

Preferably one or more of the following is applicable to the part: a cross section many times, e.g. at least 5 or 10 times, larger then that of the cable; has a height (parallel to the direction from the foot to the rail head) substantially equal to its depth (parallel to the direction from the one to the opposite toe of the rail foot) and/or its width (parallel to the rail length); has a width of at least 1 centimetre and/or 5 or 10 or 20 centimetre at the most. E.g. the parts have a spacing of at least approximately 50 or 100 centimetre along the rail, clamped by respective clamps.

Preferably the cable is mounted by the part at the location approximately where the foot and the web of the rail meet, or on top of the root of the rail foot. The cable is preferably pressed by the part such that the cable bears directly against the surface of the rail.

In the drawing an example of the invention is shown.
Fig. 1 shows a top view of the mounting part;
Fig. 2 shows the cross section of the part of fig. 1 along the line A-A;

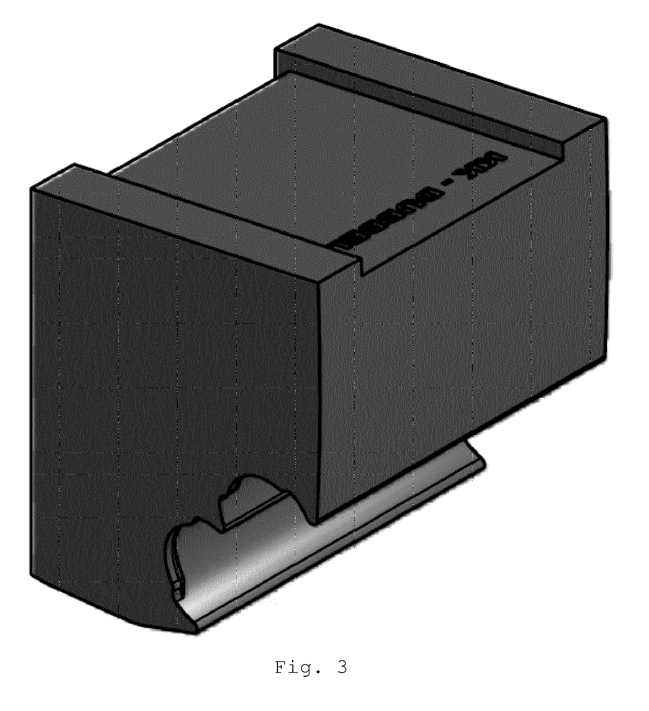

Fig. 3 shows the part of fig. 1 in perspective;

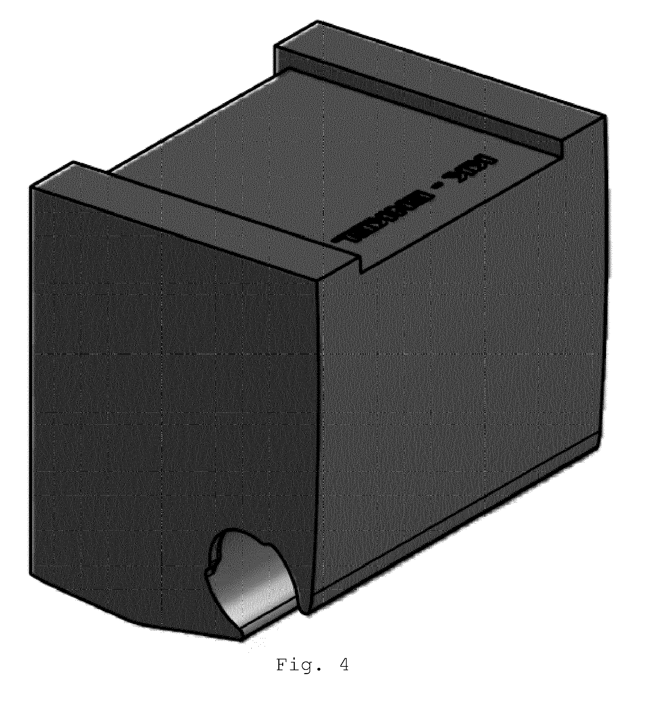

Fig. 4 shows in the view of fig. 3 an alternative;
Fig. 5 shows in cross section an assembly;
Fig. 6 shows an alternative clamp;
Fig. 7 and 8 show a Photo of the assembly of fig. 5, from two different angles; and

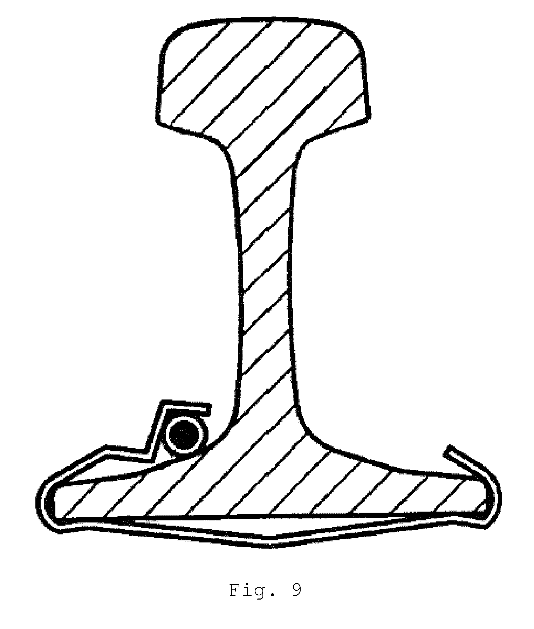

Fig. 9 shows a prior art assembly (CN2421219Y)

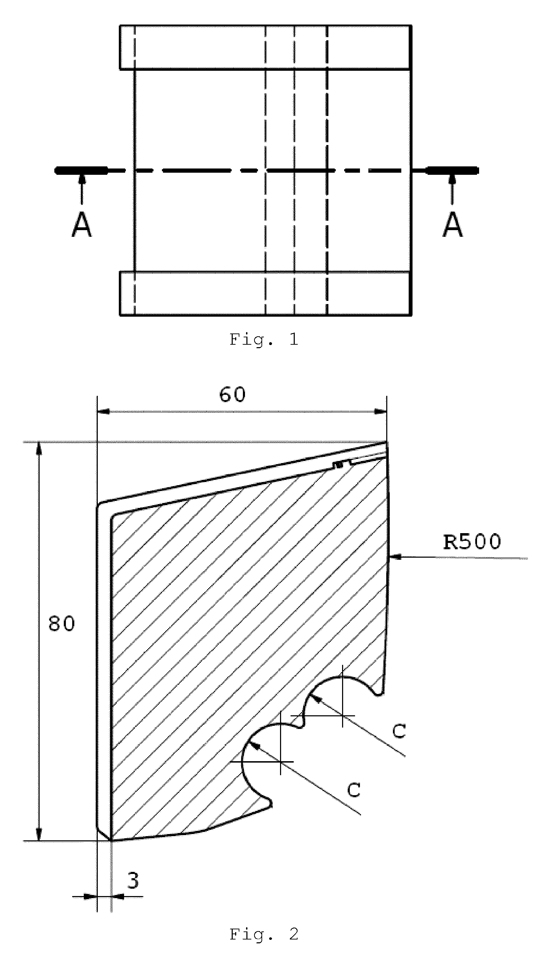

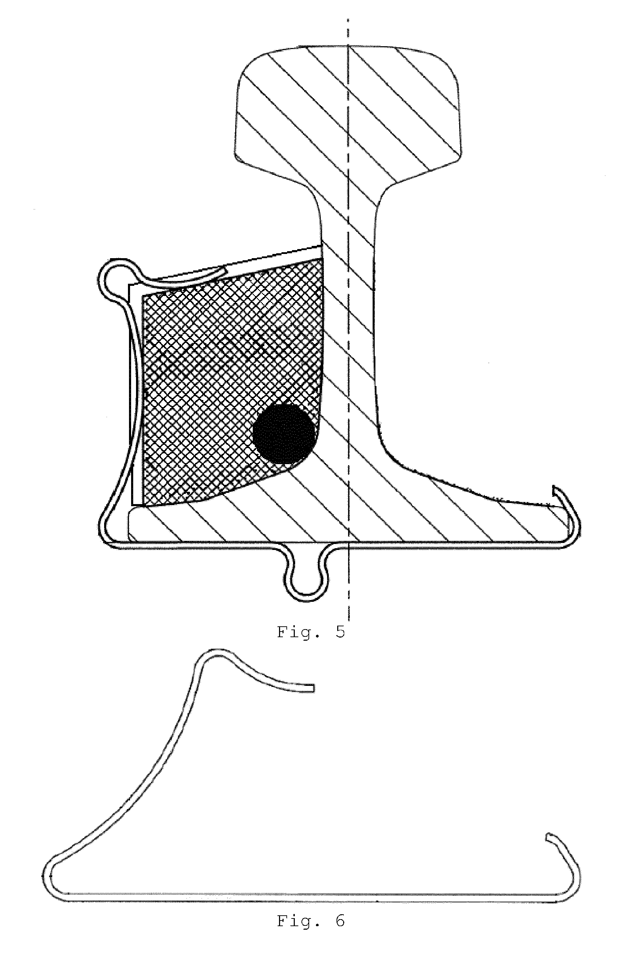

In fig. 2 C indicates the location of the two edge recesses for the tightly fit of each a cable. The dimensions in fig. 2 are in millimetre, the part has a width of approximately 60 millimetre. The clamp, approximately 50 millimetre width, of fig. 5 differs from fig. 6 due to the absence of a loop below the rail foot.

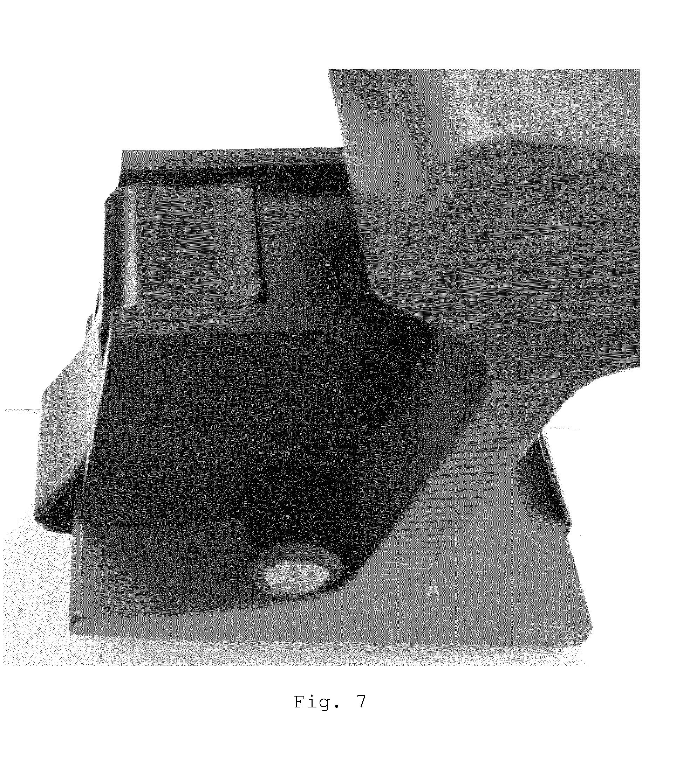

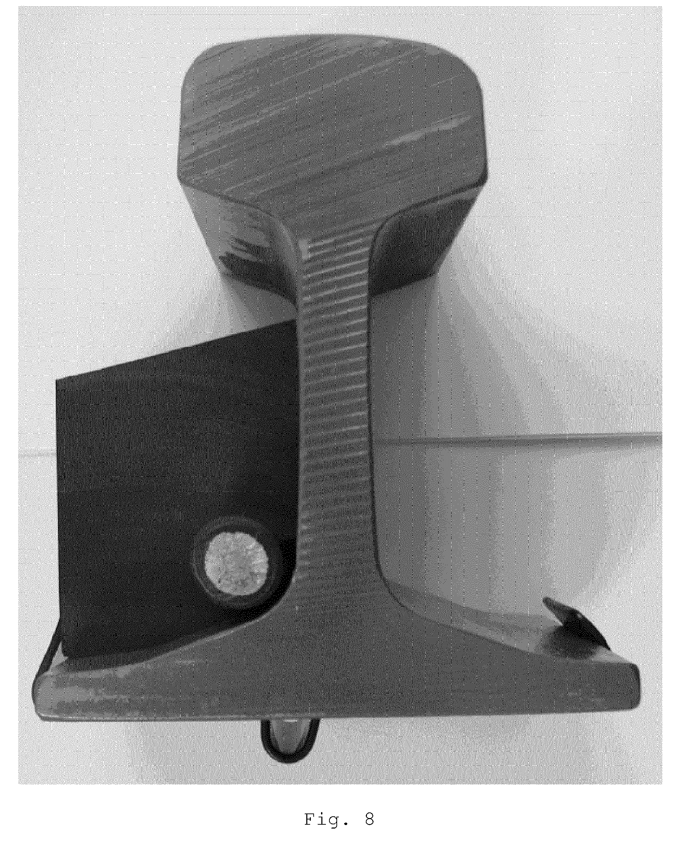

Fig. 5, 7 and 8 show the mounting of a single cable (in fig. 5 the big dark spot) by the part that by the clamped is clamped against the rail. The clamp remains fixed to the rail by clamping action, thus has snapping action.

## Claims

1. Mounting of a cable to a railway rail, wherein across the cable a separate part, e.g. dice, is located, which part has an across its complete width extending cavity, e.g. edge recess, which in itself or together with the rail provides an along a part of the length of the cable extending, the cable radially around completely surrounding cavity with a shape and dimension substantially equal to the cross section of the cable and preferably located at the location approximately where the foot and web of the rail meet, and which part by a to the rail by snapping hooked resilient finger of e.g. strip like spring steel is anchored to the rail.

2. Mounting according to claim 1, wherein the resilient finger co-operates clamping with two mutually an angle making surfaces of the part, the one extending from the toe of the rail foot upward and the other from the web of the rail to the side extending.

3. Mounting according to claim 1 or 2, wherein in the surfaces engaged by the finger the finger at both sides is retained by an edge retainer of the part to parallel to the rail length keep the part against sliding.

4. Mounting according to any of claims 1-3, wherein the resilient finger keeps the part against the web and foot of the rail by clamping.

5. Mounting according to any of claims 1-4, wherein the part has a cross section at least five times lager than the cross section of the cable and/or is made a solid natural rubber.

6. Mounting according to any of claims 1-5, the part has a reinforcement of fibres with a length at least 5 millimetre, which fibres are preferably homogeneously spread through the part.

7. Mounting according to any of claims 1-6, wherein the part has a width (measured parallel to the rail length) of at least 1 and/or 5 centimetre at the most.

8. Mounting according to any of claims 1-7, and along the rail a plurality of parts having a spacing of at least 50 centimetre is mounted by respective resilient fingers.
